# EUROPÄISCHE PATENTSCHRIFT

(11) **EP 2 732 689 B1**
(45) Veröffentlichungstag und Bekanntmachung des Hinweises auf die Patenterteilung: **12.08.2015**
(21) Anmeldenummer: 13173130.9
(22) Anmeldetag: 21.06.2013
(51) Int. Cl.: A01D 41/14

(54) **Schneidwerk**
Cutting assembly
Barre de coupe

(30) Priorität: 19.09.2012 DE 102012108835
(43) Veröffentlichungstag der Anmeldung: 21.05.2014
(73) Patentinhaber: CLAAS Selbstfahrende Erntemaschinen GmbH, 33428 Harsewinkel (DE)
(72) Erfinder: Füchtling, Christian, 59387 Ascheberg (DE)

(56) Entgegenhaltungen:
- EP-A2- 2 422 606
- US-B1- 7 950 212
- US-B2- 7 805 921

## Beschreibung

Die vorliegende Erfindung betrifft ein Schneidwerk gemäß dem Oberbegriff des Anspruches 1.

Aus der US 7,805,921 B2 ist ein Schneidwerk gemäß dem Oberbegriff des Anspruches 1 bekannt. Das Schneidwerk umfasst eine oder mehrere Bodengruppen, die einen Rahmen sowie eine Messerbalkenanordnung aufweisen, wobei jede Bodengruppe eine Vielzahl schwenkbar mit dem Rahmen verbundener Tragarme aufweist, an deren äußeren Enden die Messerbalkenanordnung starr befestigt ist. Die Tragarme sind um eine horizontale Achse schwenkbar an dem Rahmen angelenkt, um eine örtlich begrenzten Auslenkung des Messerbalkens in vertikaler Richtung in Folge von Bodenunebenheiten zu ermöglichen. Als nachteilig an dieser Anordnung ist anzusehen, dass die starre Verbindung der Messerbalkenanordnung mit den Tragarmen und der nur eine Freiheitsgrad des Tragarmes zu einer geringen Flexibilität sowie einer höheren Belastung des Messerbalkens durch Biege- und Torsionskräfte führt. Ein weiterer Nachteil resultiert aus der starren Anordnung des Messerbalkens an den Tragarmen, da die Auslenkung des Messerbalkens auf Grund der fehlenden Flexibilität der Tragarme zu einer Stufenbildung führt, was mit einer stärkeren Belastung des Messerantriebes einhergeht.

Aufgabe der vorliegenden Erfindung ist es, ein Schneidwerk der eingangs genannten Art derart weiterzubilden, dass dessen Nachteile überwunden werden.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß dem Anspruch 1 wird vorgeschlagen, dass jeder Tragarm um eine erste Drehachse in vertikaler Richtung und um eine sich senkrecht zur ersten Drehachse erstreckende zweite Drehachse schwenkbar mit dem Hauptrahmen verbunden. Die Verdrehbarkeit des Tragarmes um zwei Drehachsen ermöglicht es dem Messerbalken zusätzlich zu der Ausgleichsbewegung auf Grund einer sich ändernden Bodenkontur auch um die Längsachse des Tragarmes zu tordieren, wodurch die Belastung des Messerbalkens reduziert wird. Zudem können der Messerbalken und der Tragarm in Längsrichtung des Schneidwerkes gesehen der Bodenkontur besser folgen, das heißt die Ausführbarkeit einer wellenförmige Bewegung des Messerbalkens wird durch die zweiachsige Anlenkung am Rahmen vereinfacht.

Hierbei kann sich die erste Drehachse parallel zum Hauptrahmen erstrecken und die zweite Drehachse an der ersten Drehachse angelenkt sein. Diese Anordnung hat sich in Anbetracht des begrenzten Bauraumes als besonders geeignet erwiesen.

Vorzugsweise können an dem Hauptrahmen Konsolen zur Verbindung der Tragarme mit dem Hauptrahmen angeordnet sein.

Dabei kann die jeweilige Konsole die erste Drehachse und die zweite Drehachse aufnehmen.

Insbesondere können an der Konsole einander gegenüberliegend zwei Führungselemente achsparallel zu der ersten Drehachse angeordnet sein, die mit jeweils einer korrespondierenden Kulisse im Tragarm in Eingriff stehen. Das Zusammenspiel und die Führung der Führungselemente in den Kulissen der Tragarme ermöglicht eine lageabhängige Bewegungsbegrenzung des Tragarmes bezüglich der ersten und der zweiten Drehachse.

In vorteilhafter Weiterbildung können die Führungselemente als Endabschnitte einer in der Konsole gelagerten Schwenkachse ausgebildet sein.

Vorzugsweise können die Kulissen derart ausgebildet sein, dass sie Endanschläge für die Schwenkbewegung um die erste Drehachse und/oder die zweite Drehachse bilden. Auf diese Weise lassen sich unterschiedliche Betriebsmodi des Schneidwerkes realisieren.

Hierzu kann die Kulisse im Wesentlichen rautenförmig ausgeführt sein. Die im Wesentlichen rautenförmige Ausbildung der Kulisse erlaubt es in einfacher Weise, erforderliche Begrenzungen der Beweglichkeit des Tragarmes darzustellen. Die Kulisse dient als Endanschlag für die Bewegung des Tragarmes in vertikaler Richtung, also um die erste Drehachse, um bei Erreichen einer oberen oder einer unteren Endlage des Tragarmes, in der der Tragarm seine maximale Auslenkung erfahren hat, die Beweglichkeit zu blockieren. Hierzu liegt das Führungselement in der jeweiligen Endlage des Tragarmes an einem dem Rahmen zugewandten oder abgewandten Ende der Kulisse an. Das Blockieren der Bewegung der Tragarme in vertikaler Richtung ist dann erforderlich, wenn das Schneidwerk für das Ernten von Fruchtarten verwendet werden soll, für die eine Flexibilität des Messerbalkens und der Fördervorrichtung nicht erforderlich ist, wie beispielsweise bei der Ernte von Getreide. Zugleich wird in dieser Position auch ein Tordieren um die zweite Drehachse verhindert, da die im Wesentlichen rautenförmige Kulisse dem Führungselement keine Bewegungsfreiheit in vertikaler Richtung lässt.

Insbesondere kann die jeweilige Konsole aus zwei plattenförmigen, parallel zueinander angeordneten Befestigungselementen gebildet sein. Die Befestigungselemente sind vorzugsweise spiegelsymmetrisch ausgeführt.

Dabei können die Befestigungselemente derart ausgeführt sein, dass sie in einem Aufnahmebereich der ersten Drehachse einen geringeren Abstand zueinander aufweisen als in einem Aufnahmebereich der Schwenkachse. Diese Ausgestaltung verhindert, dass der Kraftfluss innerhalb der Befestigungselemente, der durch die Tordierung des Tragarmes um die zweite Drehachse eingeleitet wird, zu einer Verformung der Konsole führt.

Weiterhin kann zumindest eine sich parallel zum Rahmen eines jeden Seitenabschnittes erstreckende Welle drehbar in den Konsolen gelagert sein. Diese Welle dient der Höhensteuerung des Schneidwerkes.

Hierzu kann die Welle durch eine Hebelanordnung mit dem jeweiligen Tragarm verbunden sein. Durch die Hebelanordnung wird bei einer Lageänderung des Tragarmes bezüglich der ersten Drehachse die Auslenkung des Tragarmes in vertikaler Richtung als eine rotatorische Bewegung auf die Welle übertragen. Die größte vertikale Auslenkung eines der Tragarme eines Seitenabschnittes resultiert in der stärksten Verdrehung der gemeinsamen, durchgehenden Welle, was für eine automatische Höhenanpassung des Schneidwerkes herangezogen werden kann. Dazu kann das Schneidwerk, welches an einem Einzugskanal eines Mähdreschers angeordnet ist, durch entsprechende, am Einzugskanal angeordnete Hydraulikzylinder in seiner Höhe derart verstellt werden, dass der Abstand des Hauptrahmens gegenüber dem Boden an allen Seitenabschnitten nahezu gleich ist. Hierdurch soll verhindert werden, dass ein oder mehrere Tragarme, die auf Grund eines abschüssigen Bodens ihre maximale vertikale Auslenkung erreicht haben, bei einem plötzlichen Auftreten einer Bodenwelle dieser Bodenkontur nicht schnell genug durch eine Aufwärtsbewegung folgen können, so dass der Messerbalken gegen diese Bodenwelle bewegt wird.

Des Weiteren kann die Welle mit zumindest einem Sensor zur Erfassung der Drehbewegung der Welle verbunden sein, um ein entsprechendes Steuerungssignal bereitstellen zu können. Der Sensor kann vorzugsweise als Potentiometer ausgeführt sein, was eine besonders kostengünstige Variante für einen Sensor darstellt. Vorzugsweise weist jeder Seitenabschnitt zumindest ein Potentiometer auf, mit dem das Verdrehen der zumindest Welle überwacht wird. Das Signal des zumindest einen Potentiometers an dem jeweiligen Seitenabschnitt kann an eine Steuereinrichtung auf dem Mähdrescher übertragen und von dieser ausgewertet werden. Auf Basis der Signalauswertung durch die Steuereinrichtung werden die Hydraulikzylinder des Einzugskanales des Mähdreschers angesteuert und in ihrer Position verändert.

Weiterhin kann an der Schwenkache ein Hubzylinder angelenkt sein, der mit dem Tragarm in Wirkverbindung steht. Die über die Breite des Schneidwerkes angeordnete Vielzahl von Hubzylindern dienen der Gewichtsentlastung des Messerbalkens.

In bevorzugter Weiterbildung kann der Druck, mit der jeweilige Hydraulikzylinder beaufschlagbar ist, derart erhöht werden, dass eine starre Positionierung der Tragarme erreichbar ist.

Die Anbindung der Hebelanordnung durch einen Hebelarm sowie eines Abschnittes des Hubzylinders an den jeweiligen Tragarm erfolgt nahezu auf einer Höhe mit der zweiten Drehachse, um negative Einflüsse durch die Tordierung des Tragarmes auf den Hubzylinder beziehungsweise bei der Übertragung der vertikalen Auslenkung des Tragarmes durch die Hebelanordnung auf die Welle zu vermeiden. Je größer die Beabstandung zur Ebene der Drehachse, desto größer ist der Hebel, durch welchen Kräfte bei dem Tordieren des Tragarmes auf die Hebelanordnung sowie den Hubzylinder einwirken.

Die vorliegenden Erfindung wird nachstehend anhand von einem in den Zeichnungen dargestellten Ausführungsbeispiel näher erläutert.

Es zeigen:
- Fig. 1: eine schematische, teilweise freigeschnittene Ansicht eines Schneidwerkes;
- Fig. 2: eine Detailansicht des teilweise freigeschnittenen Bereiches des Schneidwerkes gemäß Fig. 1;
- Fig. 3: eine Draufsicht auf eine Konsole gemäß Fig. 2 ohne den daran angeordneten Tragarm;
- Fig. 4: eine Teillängsschnittansicht der Konsole 16 und des daran angeordneten Tragarmes 15 entlang der Linie IV-IV gemäß Fig. 2;
- Fig. 5a bis 5d: perspektivische Teilansicht des Hauptrahmens mit einem Tragarm in unterschiedlichen Positionen.

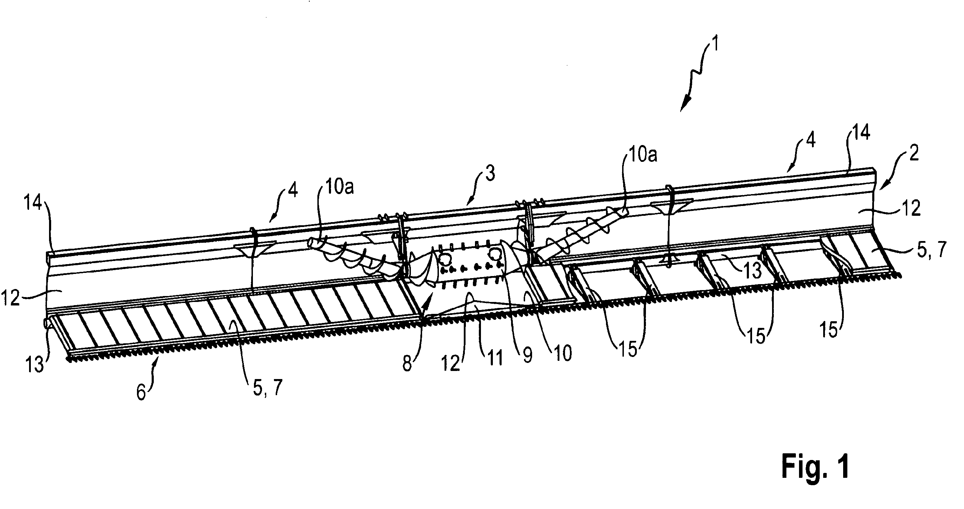

Die Darstellung in Fig. 1 zeigt eine schematische, teilweise freigeschnittene Ansicht auf ein Schneidwerk 1. Das Schneidwerk 1 weist einen Hauptrahmen 2 auf, an welchem ein Mittenabschnitt 3 und mindestens zwei benachbart zu dem Mittenabschnitt 3 angeordnete Seitenabschnitte 4 angeordnet sind. An dem Mittenabschnitt 3 und den Seitenabschnitten 4 ist auf der dem Grundrahmen 2 gegenüberliegenden Vorderseite des Schneidwerkes 1 ein durchgehender, flexibler Messerbalken 6 angeordnet, der sich im Wesentlichen über die gesamte Bereite des Schneidwerkes 1 erstreckt. An dem Grundrahmen 2 des Schneidwerkes 1 sind Haspeln angeordnet, die sich über die Breite eines Seitenabschnittes 4 sowie teilweise über die Breite des Mittenabschnittes 3 erstrecken. Die Haspeln dienen der Verbesserung der Annahme des Erntegutes durch den Messerbalken 6.

Das von dem Messerbalken 6 abgetrennte Erntegut wird einer hinter dem Messerbalken 6 angeordneten Fördervorrichtung 5 zugeführt, die auf den jeweiligen Seitenabschnitten 4 als mindestens ein endlos umlaufendes Band 7 ausgeführt ist. Die endlos umlaufenden Bänder 7 sind benachbart zu dem Mittenabschnitt 3 angeordnet, um das von dem Messerbalken 6 abgeschnittene Erntegut parallel zu der Längsachse des Schneidwerkes 1 in Richtung des Mittenabschnittes 3 zu transportieren und einer Einzugsvorrichtung 8 zuzuführen. Die Einzugsvorrichtung 8 ist als eine antreibbare Einzugswalze 9 ausgeführt, der sich seitlich nach außen erstreckende Einzugsschnecken 10 zugeordnet sind. Die Einzugsvorrichtung 8 führt das von den endlosen Bändern 7 dem Mittenabschnitt 3 seitlich zugeführte Erntegut einer in dem Hauptrahmen 2 vorgesehenen, hinter der Einzugswalze 9 befindlichen Öffnung zu, durch welche das Erntegut durch einen an einem nicht dargestellten Mähdrescher befindlichen Einzugskanal, an dem das Schneidwerk 1 befestigbar ist, dem Mähdrescher zur weiteren Verarbeitung übergeben wird.

Der Mittenabschnitt 3 umfasst eine Bodenplatte 10, die auf ihrer der oberhalb der Bodenplatte 10 angeordneten Einzugswalze 9 zugewandten Oberseite konturiert ausgeführt ist, während die dem Boden zugewandte Unterseite der Bodenplatte 10 im Wesentlichen eben ausgeführt ist. Die konturierte Oberseite der Bodenplatte 10 weist einen keilförmigen, erhabenen Vorsprung 11 auf. Der Vorsprung 11 ist von der Vorderkante des Schneidwerkes 1 ausgehend sich in Richtung der Einzugsvorrichtung 8 verjüngend ausgeführt und mündet in einer der Einzugswalze 9 zugewandten Spitze 12. Der Vorsprung 11 dient der zwangsgeführten Gutumlenkung, um das von den Bändern 7 bereitgestellte Erntegut in den Einzugsbereich der Einzugsvorrichtung 8 umzulenken und die Gutannahme zu verbessern. Die Höhe des Vorsprunges 11 kann dabei variieren, um eine ausreichende Gutumlenkung zu sichern.

Gemäß der Darstellung in Fig. 1 ist ein Seitenabschnitt 4 teilweise freigeschnitten, um die unterhalb des Bandes 7 befindliche Struktur des Schneidwerkes 1 zu veranschaulichen. Der Aufbau der Seitenteile 4 ist identisch, so dass nur ein Seitenteil 4 im Teilschnitt dargestellt ist. Der Hauptrahmen 2 weist sich vertikal zur Bewegungsrichtung des Bandes erstreckende Rückwände 12 auf, die zwischen vorzugsweise hohlzylindrischen Profilelementen 13, 14 eingefasst sind. Im Mittenabschnitt 3 ist die Einzugsvorrichtung 8 an den Profilelementen 13, 14 des Hauptrahmens 2 angeordnet. Jeder Seitenabschnitt 4 weist eine Vielzahl von um eine horizontale Achse schwenkbar an dem Hauptrahmen 2 angeordneten Tragarmen 15 auf. Die Tragarme 15 des jeweiligen Seitenabschnittes 4 tragen den flexiblen Messerbalken 6 und werden gemeinsam mit diesem durch Unebenheiten im Boden in vertikaler Richtung ausgelenkt, wenn das Schneidwerk 1 im Erntebetrieb über den Boden geführt wird. Der Messerbalken 6 ist starr mit dem jeweiligen Tragarm 15 verbunden.

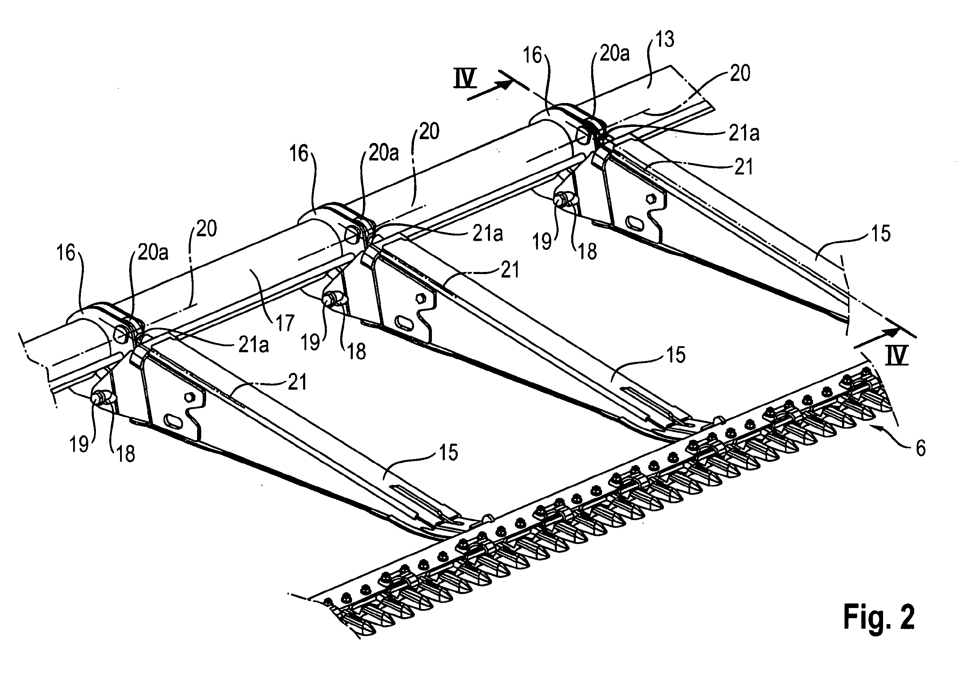

Die Darstellung in Fig. 2 zeigt eine Detailansicht des teilweise freigeschnittenen Bereiches des Schneidwerkes gemäß Fig. 1, aus welcher die Anordnung der Tragarme 15 an dem Profilelement 13 des Hauptrahmens 2 deutlicher wird. Der jeweilige Tragarme 15 ist durch jeweils eine Konsole 16 an dem Profilelement 13 angeordnet. Es sind mehrere Konsolen 16 zueinander beabstandet über die Breite des jeweiligen Seitenabschnittes 4 verteilt angeordnet. Die Konsolen 16 nehmen neben dem jeweiligen Tragarm 15 zudem eine durchgehende, sich parallel zu dem Profilelement 13 erstreckende Welle 17 auf, die drehbar in den Konsolen 16 gelagert ist. Die Welle 17 erstreckt sich dabei im Wesentlichen über die gesamte Breite des Seitenteiles 4. Oberhalb der Welle 17 ist der Tragarm 15 um eine erste Drehachse 20, die sich achsparallel zu dem Profilelement 13 erstreckt, schwenkbar gelagert an der Konsole 16 angeordnet. Der Tragarm 15 ist um die erste Drehachse 20 in vertikaler Richtung schwenkbar, so dass bei einer vertikalen Auslenkung des Messerbalkens 6 durch Unebenheiten im Boden der jeweilige Tragarm 15 dieser Bewegung folgt. Hierzu ist an der Konsole 16 ein Drehgelenk 20a angeordnet, welches die erste Drehachse 20 bildet. Weiterhin ist an dem Drehgelenk 20a ein Drehlager 21 a angeordnet, welches eine zweite Drehachse 21 bildet, die sich senkrecht zur ersten Drehachse 20 erstreckt, um welche der Tragarm 15 schwenkbar ist. Der Tragarm 15 ist unmittelbar mit dem Drehlager 21 a verbunden und durch die Anordnung des Drehlagers 21 a an dem Drehgelenk 20a mit der Konsole 16. Die zweite Drehachse 21 ermöglicht es dem Tragarm 15, eine Schwenkbewegung quer zur Bewegungsrichtung des Schneidwerkes 1 auszuführen. Diese Ausgleichsbewegung kompensiert die in Folge der starren Verbindung von Tragarm 15 und Messerbalken 6 auf diesen übertragenen Biege- und Torsionskräfte, wodurch die Belastung des Messerbalkens 6, insbesondere durch die Biegekräfte, reduziert wird.

Wie der Darstellung in Fig. 2 weiterhin zu entnehmen ist, weist jede Konsole 16 unterhalb der Welle 17 einander gegenüberliegend ein Führungselement 19 auf, der achsparallel zu der ersten Drehachse 20 angeordnet ist. Die Führungselemente 19 stehen mit jeweils einer Kulisse 18 im Tragarm 15 in Eingriff. Die Darstellung in Fig. 2 zeigt jeweils nur ein Führungselement 19 an der Konsole 16 sowie jeweils nur eine korrespondierende Kulisse 18 an dem Tragarm 15, die auf Grund des symmetrischen Aufbaus der Konsolen 16 und der Tragarme 15 jedoch beidseitig der Konsole 16 angeordnet sind. Die Kulissen 18 weisen eine im Wesentlichen rautenförmige Kurvenbahn auf, um eine lageabhängige Bewegungsbegrenzung des Tragarmes 15 bei einem Verschwenken um eine oder beide Drehachsen 20, 21 zu erreichen, wie weiter unter im Detail ausgeführt wird.

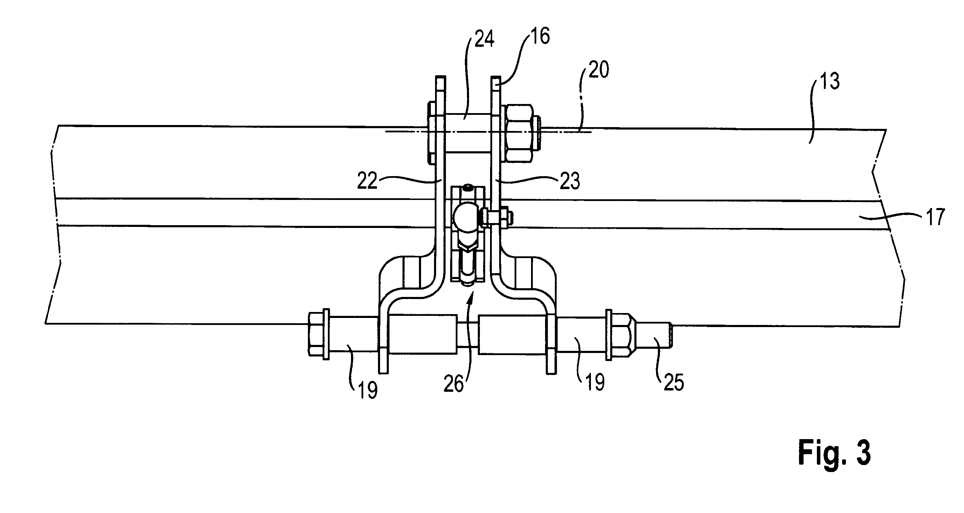

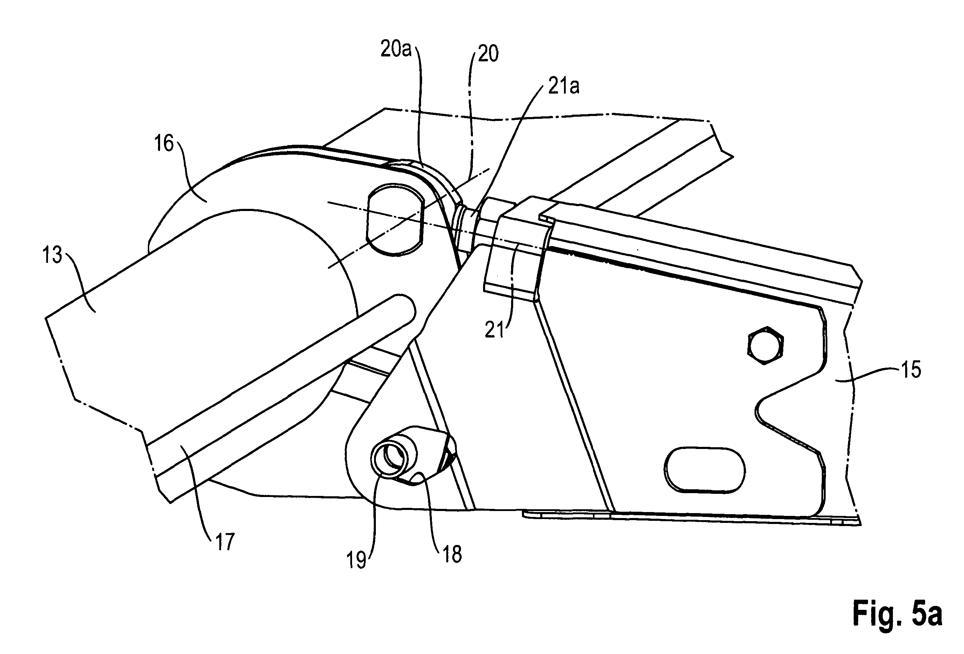

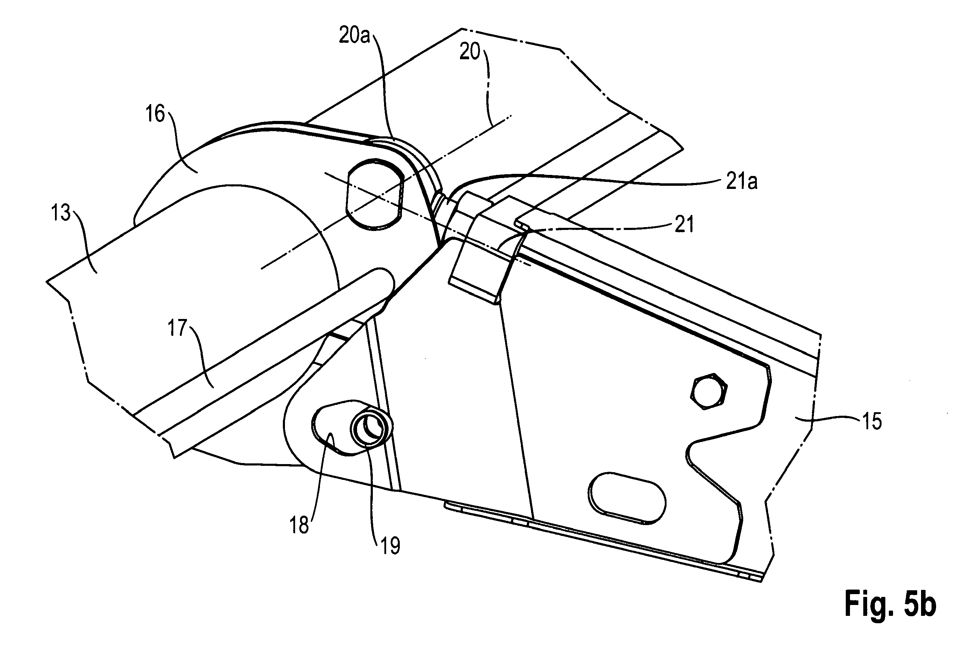

In Fig. 3 ist eine Draufsicht auf eine Konsole 16 gemäß Fig. 2 ohne den daran angeordneten Tragarm 15 dargestellt. Die Konsole 16 ist aus zwei plattenförmigen, parallel zueinander angeordneten Befestigungselementen 22, 23 gebildet, die spiegelbildlich zu einer Längsachse der Konsole 16 angeordnet sind. Die Befestigungselemente 22, 23 weisen eine im Wesentlichen S-förmige Kontur auf, so dass sie in einem oberhalb der Welle 17 liegenden Bereich der Konsole 16 einen geringeren Abstand zu einander aufweisen als in einem unterhalb der Welle liegenden Bereich. Die Befestigungselemente 24 sind im oberen Bereich der Konsole 16 durch einen ersten Bolzen 24 zueinander beabstandet auf dem Profilelement 13 des Hauptrahmens 2 angeordnet. In dem unterhalb der Welle 17 liegenden Bereich der Konsole 16 befindet sich ein zweiter Bolzen 25, der die weiter zueinander beabstandeten Abschnitte der Befestigungselemente 22, 23 miteinander verbindet. Der erste Bolzen 24 trägt das Drehgelenk 20a, um dessen Drehachse 20 der Tragarm 15 in vertikaler Richtung schwenkbar ist. Der erste Bolzen 24 und der zweite Bolzen 25 sind achsparallel zueinander angeordnet. Zudem sind die Abstände der Durchbohrungen des jeweiligen Befestigungselementes 22, 23 zueinander, durch die sich der erste Bolzen 24 und der zweite Bolzen 25 erstrecken, derart gewählt, dass sich ein im Wesentlichen dreieckförmiger Aufbau der Konsole 16 ergibt. Der Kraftfluss innerhalb der Konsole 16 folgt diesem dreieckförmigen Aufbau, wodurch bei einem Verschwenken des Tragarmes 15 eine verdrehstabile Position in den Endlagen, wie sie in den Figuren 5a und 5b dargestellt sind, erreicht ist. Dies gibt dem Messerbalken 6 mehr Halt, wenn das Schneidwerk 1 in einer Betriebsart verwendet wird, in der der Messerbalken 6 und die Tragarme 15 gegenüber dem Hauptrahmen 2 starr über den Boden geführt werden sollen, wie dies beispielsweise bei der Getreideernte der Fall ist. Die Führungselemente 19 sind als Abschnitte an den Enden des in der Konsole 16 angeordneten zweiten Bolzens 25 ausgeführt. Bei den Führungselementen 19 kann es sich um Hülsen handeln, die auf den Bozen 25 aufgeschoben sind.

Des Weiteren zeigt die Darstellung gemäß Fig. 3 eine Hebelanordnung 26, durch die die Welle 17 mit dem Tragarm 15 verbindbar ist. Die Hebelanordnung 26 dient dazu, die Auslenkung des Tragarmes 15 in vertikaler Richtung auf die Welle 17 zu übertragen. Durch die Hebelanordnung 26 wird bei einer Lageänderung des Tragarmes 15 bezüglich der ersten Drehachse 20 die Auslenkung des Tragarmes 15 in vertikaler , Richtung auf die Welle 17 als eine rotatorische Bewegung übertragen. Die größte vertikale Auslenkung eines Tragarmes 15 an einem Seitenabschnitt 4 resultiert in der stärksten Verdrehung der Welle 17, was als ein Signal für eine automatische Höhenanpassung des Schneidwerkes 1 zur Auswertung herangezogen werden kann. Hierzu kann das Schneidwerk 1, welches an einem Einzugskanal eines Mähdreschers angeordnet ist, durch entsprechende am Einzugskanal angeordnete Hydraulikzylinder in seiner Höhe derart verstellt werden, dass der Abstand des Hauptrahmens 2 gegenüber dem Boden an allen Seitenabschnitten 4 nahezu gleich ist.

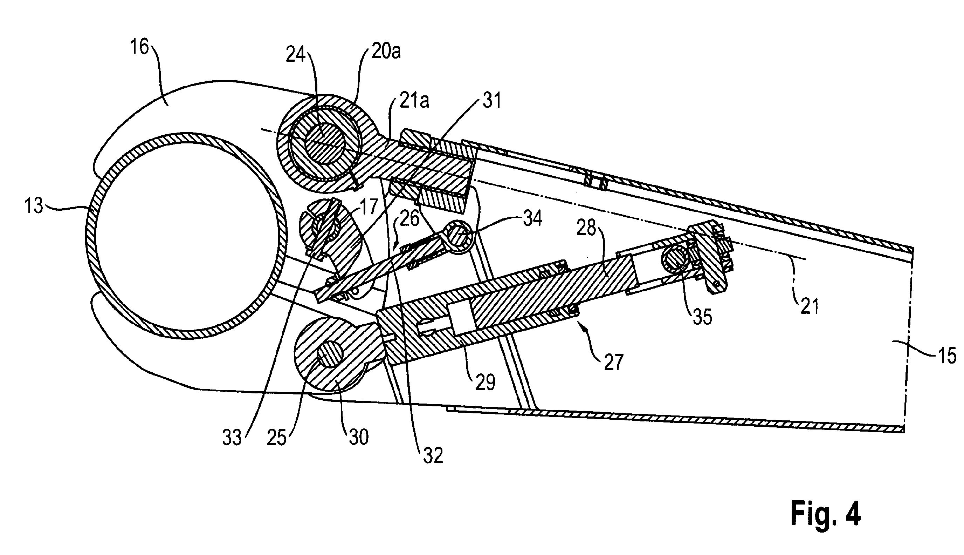

Fig. 4 zeigt eine Darstellung der Konsole 16 und des daran angeordneten Tragarmes 15 in einer Teillängsschnittansicht entlang der Linie IV-IV gemäß Fig. 2. Im Inneren eines jeden Tragarmes 15 ist ein Hubzylinder 27 angeordnet, der sich über die Konsole 16 am Hauptrahmen 2 abstützt und der der Gewichtsentlastung des Messerbalkens 6 dient. Der Hubzylinder 27 umfasst einen Kolben 28 und einen Zylinder 29. Der zweite Bolzen 25 bildet eine Schwenkachse für den Hubzylinder 27. Hierzu ist der Hubzylinder 27 mit seinem Zylinder 29 durch ein Drehgelenk 30 um den zweiten Bolzen 25 schwenkbar an der Konsole 16 angeordnet. Der Kolben 28 ist an der Innenseite des Tragarmes 15 an einer Schwenkachse 35 angelenkt. Der Druck, mit dem der Hubzylinder 27 beaufschlagbar ist, ist veränderbar. Insbesondere kann der Druck soweit erhöht werden, dass der Tragarm 15 nahezu starr positioniert gegenüber dem Hauptrahmen 2 ist, wodurch das Schneidwerk 1 in einer Betriebsart betreibbar ist, wenn beispielsweise Getreide geerntet werden soll. Die Anlenkung des Hubzylinders 27 an der Schwenkachse 35 im Inneren des Tragarmes 15 erfolgt nahezu in unmittelbarer Nähe der zweiten Drehachse 21, damit der Hubzylinder 27 ein möglichst kleines Drehmoment auf den Tragarm 15 überträgt, wenn dieser um die erste Drehachse 20 verschwenkt wird.

Die Hebelanordnung 26 umfasst einen ersten Schenkel 31, der durch einen Splint oder Bolzen 33 mit der Welle 17 drehfest verbunden ist. Der erste Schenkel 31 ist mit einem zweiten Schenkel 32 derart verbunden, dass diese sich relativ zueinander bewegen können. Der zweite Schenkel 32 ist um eine Schwenkachse 34 der Hebelanordnung 26 drehbar gelagert. Eine Aufwärtsbewegung des Tragarmes 15 auf Grund einer Bodenunebenheit führt dazu, dass diese Bewegung durch den zweiten Schenkel 32 auf den ersten Schenkel 31 und damit auf die mit dem ersten Schenkel 31 drehfest verbundene Welle 17 übertragen wird. Da die Auslenkung der Tragarme 15 auf Grund einer ungleichmäßigen Bodenkontur über die Breite eines Seitenabschnittes 4 des Schneidwerkes 1 unterschiedlich sein kann, wird die Welle 17 durch den ersten Schenkel 31 in jeweils unterschiedlichem Maße von dem jeweiligen Tragarm 15 verdreht. Diese Drehbewegung der Welle 17 wird auf jedem Seitenabschnitt 4 durch zumindest einen Sensor erfasst, der vorzugsweise als ein Drehpotentiometer ausgeführt ist. Die größte vertikale Auslenkung eines Tragarmes 15 an einem Seitenabschnitt 4 resultiert in der stärksten Verdrehung der Welle 17.

In den Fig. 5a bis 5d sind perspektivische Teilansicht des Hauptrahmens 2 mit einem Tragarm 15 in unterschiedlichen Positionen dargestellt. Anhand dieser Figuren wird die Bewegungsbegrenzung durch die rautenförmige Kurvenbahn der Kulisse 18 erläutert.

Wie in Fig. 5a dargestellt, befindet sich der Tragarm 15 in einer Position, in der das Führungselement 19 an dem dem Hauptrahmen 2 zugewandten Endabschnitt der Kulisse 18 anliegt. Der Tragarm 15 ist in vertikaler Richtung in eine zunehmend vom Boden beabstandete Stellung überführt worden. Diese Bewegung beziehungsweise der von dem Tragarm 15 in vertikaler Richtung nach oben zurücklegbare Weg wird durch das Anliegen des Führungselementes 19 an dem Endabschnitt der Kulisse 18 begrenzt. Die Auslenkung des Tragarmes 15 in vertikaler Richtung erfolgt als Reaktion auf eine starke Bodenunebenheit oder weil das Schneidwerk 1 in eine Betriebsart überführt wird, in der ein Schwenken der Tragarme 15 um die erste Drehachse 20 nicht notwendig ist, dass heißt, wenn das Schneidwerk 1 starr und ohne die Eigenschaft der Bodenkontur folgen zu können betrieben werden soll, wie dies beispielsweise bei der Ernte von Getreide der Fall ist.

Die Darstellung in Fig. 5b zeigt eine Position des Tragarmes 15, in der das Führungselement 19 an dem dem Hauptrahmen 2 abgewandten Endabschnitt der Kulisse 18 anliegt. Der Tragarm 15 befindet sich in einer unteren, dem Boden zugewandten Position. Diese nach unten gerichtete Bewegung beziehungsweise der von dem Tragarm 15 in vertikaler Richtung nach unten zurücklegbare Weg wird durch das Anliegen des Führungselementes 19 an diesem Endabschnitt der Kulisse 18 begrenzt. Mit dem Erreichen eines der beiden Endabschnitte der Kulisse 18 wird zugleich das Schwenken um die erste Drehachse 20 blockiert.

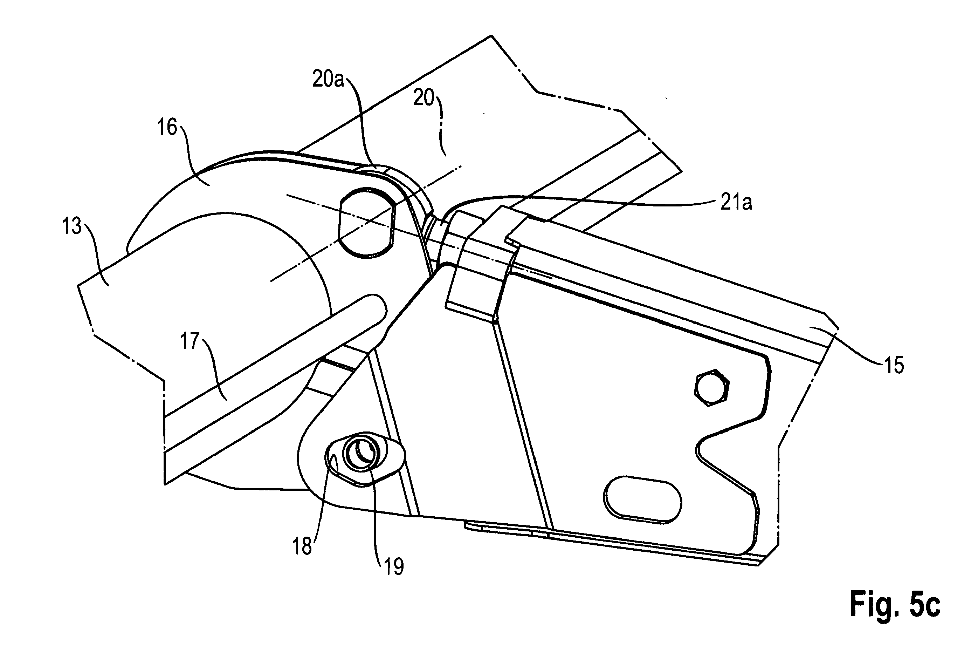

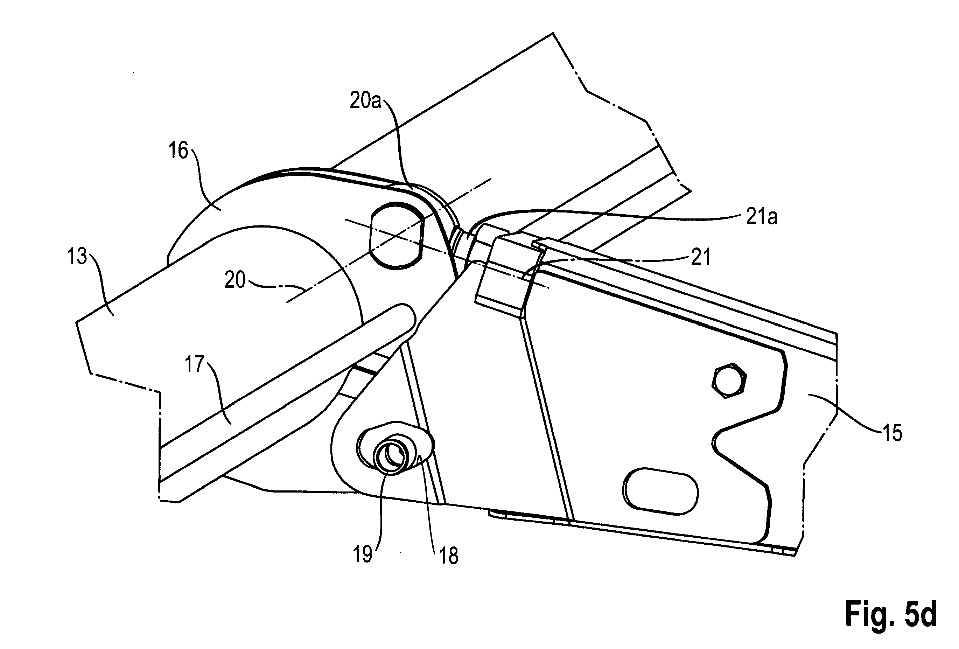

In Fig. 5c und Fig. 5d sind Positionen des Tragarmes 15 dargestellt, in denen der Tragarm 15 um die zweite Drehachse 21 verschwenkt wurde. In Fig. 5c liegt das Führungselement 19 an einem oberen Mittenabschnitt der Kulisse 18 an. In dieser Position des Führungselementes 19 wird ein Verschwenken des Tragarmes 15 um die zweite Drehachse 21 blockiert, während der Tragarm 15 um die erste Drehachse 20 in vertikaler Richtung verschwenkbar ist. Die Darstellung in Fig. 5d zeigt die entgegengesetzte Position des Führungselementes 19, in der das Führungselement 19 an einem unteren Mittenabschnitt der Kulisse 18 anliegt.

**Bezugszeichenliste**

| | | | |
|---|---|---|---|
| **1** | Schneidwerk | **27** | Hubzylinder |
| **2** | Hauptrahmen | **28** | Kolben |
| **3** | Mittenabschnitt | **29** | Zylinder |
| **4** | Seitenabschnitt | **30** | Drehgelenk |
| **5** | Fördervorrichtung | **31** | Erster Schenkel |
| **6** | Messerbalken | **32** | Zweiter Schenkel |
| **7** | Band | **33** | Bolzen |
| **8** | Einzugsvorrichtung | **34** | Schwenkachse |
| **9** | Einzugswalze | **35** | Schwenkachse |
| **10** | Bodenplatte | | |
| **11** | Vorsprung | | |
| **12** | Spitze | | |
| **13** | Profilelement | | |
| **14** | Profilelement | | |
| **15** | Tragarm | | |
| **16** | Konsole | | |
| **17** | Welle | | |
| **18** | Kulisse | | |
| **19** | Führungselement | | |
| **20** | Erste Drehachse | | |
| **20a** | Drehgelenk | | |
| **21** | Zweite Drehachse | | |
| **21a** | Drehlager | | |
| **22** | Befestigungselement | | |
| **23** | Befestigungselement | | |
| **24** | Erster Bolzen | | |
| **25** | Zweiter Bolzen | | |
| **26** | Hebelanordnung | | |

## Patentansprüche

1. Schneidwerk (1), umfassend einen an einem Hauptrahmen (2) angeordneten Mittenabschnitt (3) und mindestens zwei, benachbart zu dem Mittenabschnitt (3) angeordnete Seitenabschnitte (4), einen flexiblen, sich über die Breite des Schneidwerkes erstreckenden Messerbalken (6) sowie zumindest eine hinter dem Messerbalken (6) angeordnete Fördervorrichtung (5), die auf den jeweiligen Seitenabschnitten (4) als mindestens ein endloses Band (7) ausgeführt ist, welches benachbart zu dem Mittenabschnitt (3) angeordnet ist, um von dem Messerbalken (6) abgeschnittenes Erntegut seitwärts in Richtung des Mittenabschnittes (3) zu transportieren, wobei die Seitenabschnitte (4) eine Vielzahl von schwenkbar an dem Hauptrahmen (2) angeordneten Tragarmen (15) aufweisen, die den Messerbalken (6) des jeweiligen Seitenabschnittes (4) tragen und starr mit dem Messerbalken (6) verbunden sind,
**dadurch gekennzeichnet,**
**dass** jeder Tragarm (15) um eine erste Drehachse (20, 20a) in vertikaler Richtung und um eine sich senkrecht zur ersten Drehachse (20, 20a) erstreckende zweite Drehachse (21, 21 a) schwenkbar mit dem Hauptrahmen (2) verbunden ist.

2. Schneidwerk (1) nach Anspruch 1, **dadurch gekennzeichnet, dass** sich die erste Drehachse (20) parallel zum Hauptrahmen (2) erstreckt und die zweite Drehachse (21) an der ersten Drehachse (20) angelenkt ist.

3. Schneidwerk (1) nach einem der Ansprüche 1 oder 2, **dadurch gekennzeichnet, dass** an dem Hauptrahmen (2) Konsolen (16) zur Verbindung der Tragarme (15) mit dem Hauptrahmen (2) angeordnet sind.

4. Schneidwerk (1) nach Anspruch 3, **dadurch gekennzeichnet, dass** die jeweilige Konsole (16) die erste Drehachse (20, 20a) und die zweite Drehachse (21, 21 a) aufnimmt.

5. Schneidwerk (1) nach einem der Ansprüche 3 oder 4, **dadurch gekennzeichnet, dass** an der Konsole (16) einander gegenüberliegend zwei Führungselemente (19) achsparallel zu der ersten Drehachse (20, 20a) angeordnet sind, die mit jeweils einer Kulisse (18) im Tragarm (15) in Eingriff stehen.

6. Schneidwerk nach Anspruch 5, **dadurch gekennzeichnet, dass** die Führungselemente (19) als Endabschnitte einer in der Konsole (16) gelagerten Schwenkachse (25) ausgebildet sind.

7. Schneidwerk nach einem der Ansprüche 5 oder 6, **dadurch gekennzeichnet, dass** die Kulissen (18) derart ausgebildet sind, dass sie Endanschläge für die Schwenkbewegung um die erste Drehachse (20, 20a) und/oder die zweite Drehachse (21, 21 a) bilden.

8. Schneidwerk (1) nach einem der Ansprüche 5 bis 7, **dadurch gekennzeichnet, dass** die Kulisse (18) im Wesentlichen rautenförmig ausgeführt ist.

9. Schneidwerk (1) nach einem der Ansprüche 3 bis 8, **dadurch gekennzeichnet, dass** die jeweilige Konsole (16) aus zwei plattenförmigen, parallel zueinander angeordneten Befestigungselementen (22, 23) gebildet ist.

10. Schneidwerk (1) nach Anspruch 9, **dadurch gekennzeichnet, dass** die Befestigungselemente (22, 23) derart ausgeführt sind, dass sie in einem Aufnahmebereich der ersten Drehachse (20. 20a) einen geringeren Abstand zueinander aufweisen als in einem Aufnahmebereich der Schwenkachse (25).

11. Schneidwerk (1) nach einem der Ansprüche 3 bis 10, **dadurch gekennzeichnet, dass** zumindest eine sich parallel zum Hauptrahmen (2) eines jeden Seitenabschnittes (4) erstreckende Welle (17) drehbar in den Konsolen (16) gelagert ist.

12. Schneidwerk (1) nach Anspruch 11, **dadurch gekennzeichnet, dass** die Welle (17) durch eine Hebelanordnung (26) mit dem jeweiligen Tragarm (15) verbunden ist.

13. Schneidwerk (1) nach einem der Ansprüche 11 oder 12, **dadurch gekennzeichnet, dass** die Welle (17) mit einem Sensor zur Erfassung der Drehbewegung der Welle (17) verbunden ist.

14. Schneidwerk (1) nach einem der Ansprüche 6 bis 13, **dadurch gekennzeichnet, dass** an der Konsole (16) ein um die Schwenkache schwenkbarer Hubzylinder (27) angelenkt ist, der mit dem Tragarm (15) in Wirkverbindung steht.

15. Schneidwerk nach Anspruch 14, **dadurch gekennzeichnet, dass** der Druck, mit der jeweilige Hubzylinder (27) beaufschlagbar ist, derart erhöht werden, dass eine starre Positionierung der Tragarme (15) erreichbar ist

## Claims

1. A header (1) including a central portion (3) arranged on a main frame (2) and at least two side portions (4) arranged adjacent to the centre portion (3), a flexible cutter bar (6) extending over the width of the header and at least one conveyor device (5) which is arranged behind the cutter bar (6) and which on the respective side portions (4) is in the form of at least one endless belt (7) arranged adjacent to the central portion (3) to transport crop material cut by the cutter bar (6) laterally in the direction of the central portion (3), wherein the side portions (4) have a plurality of carrier arms (15) which are arranged pivotably on the main frame (2) and which carry the cutter bar (6) of the respective side portion and are rigidly connected to the cutter bar (6),
**characterised in that**
each carrier arm (15) is connected to the main frame (2) pivotably about a first axis of rotation (20, 20a) in the vertical direction and about a second axis of rotation (21, 21a) extending perpendicularly to the first axis of rotation (20, 20a).

2. A header (1) according to claim 1 **characterised in that** the first axis of rotation (20) extends parallel to the main frame (2) and the second axis of rotation (21) is pivotably connected to the first axis of rotation (20).

3. A header (1) according to one of claims 1 and 2 **characterised in that** arranged on the main frame (2) are brackets (16) for connecting the carrier arms (15) to the main frame (2).

4. A header (1) according to claim 3 **characterised in that** the respective bracket (16) carries the first axis of rotation (20, 20a) and the second axis of rotation (21, 21a).

5. A header (1) according to one of claims 3 and 4 **characterised in that** arranged on the bracket (16) in mutually opposite relationship are two guide elements (19) in axis-parallel relationship with the first axis of rotation (20, 20a), which are in engagement with a respective sliding guide (18) in the carrier arm (15).

6. A header according to claim 5 **characterised in that** the guide elements (19) are in the form of end portions of a pivot axis (25) mounted in the bracket (16).

7. A header according to one of claims 5 and 6 **characterised in that** the sliding guides (18) are of such a configuration that they form limit abutments for the pivotal movement about the first axis of rotation (20, 20a) and/or the second axis of rotation (21, 21a).

8. A header (1) according to one of claims 5 to 7 **characterised in that** the sliding guide (18) is of a substantially rhomboidal configuration.

9. A header (1) according to one of claims 3 to 8 **characterised in that** the respective bracket (16) is formed from two plate-shaped fixing elements (22, 23) arranged in mutually parallel relationship.

10. A header (1) according to claim 9 **characterised in that** the fixing elements (22, 23) are of such a configuration that they are at a smaller spacing from each other in a receiving region of the first axis of rotation (20, 20a) than in a receiving region of the pivot axis (25).

11. A header (1) according to one of claims 3 to 10 **characterised in that** at least one shaft (17) extending parallel to the main frame (2) of each side portion (4) is mounted rotatably in the brackets (16).

12. A header (1) according to claim 11 **characterised in that** the shaft (17) is connected to the respective carrier arm (15) by a lever arrangement (26).

13. A header (1) according to one of claims 11 and 12 **characterised in that** the shaft (17) is connected to a sensor for detecting the rotary movement of the shaft (17).

14. A header (1) according to one of claims 6 to 13 **characterised in that** a stroke cylinder (27) pivotable about the pivot axis is pivotably connected to the bracket (16) and is operatively connected to the carrier arm (15).

15. A header according to claim 14 **characterised in that** the pressure with which the respective stroke cylinder (27) can be acted upon is increased in such a way that rigid positioning of the carrier arms (15) can be achieved.

## Revendications

1. Tablier de coupe (1), comprenant une portion centrale (3) disposée sur un châssis principal (2) et au moins deux portions latérales (4) disposées de façon adjacente à la portion centrale (3), une barre de coupe (6) flexible s'étendant sur la largeur du tablier de coupe ainsi qu'au moins un dispositif de transport (5) disposé derrière la barre de coupe (6) et réalisé sur les portions latérales (4) respectives sous la forme d'au moins une bande sans fin (7), laquelle est disposée de façon adjacente à la portion centrale (3) afin de transporter du produit de récolte coupé par la barre de coupe (6) latéralement en direction de la portion centrale (3), les portions latérales (4) présentant une pluralité de bras porteurs (15) qui sont disposés pivotants sur le châssis principal (2), qui portent la barre de coupe (6) de la portion latérale (4) respective et sont reliées rigidement à la barre de coupe (6), **caractérisé en ce que** chaque bras porteur (15) est relié au châssis principal (2) de manière à pouvoir pivoter autour d'un premier axe de rotation (20, 20a) dans la direction verticale et autour d'un deuxième axe de rotation (21, 21a) s'étendant perpendiculairement au premier axe de rotation (20, 20a).

2. Tablier de coupe (1) selon la revendication 1, **caractérisé en ce que** le premier axe de rotation (20) s'étend parallèlement au châssis principal (2) et le deuxième axe de rotation (21) est articulé sur le premier axe de rotation (20).

3. Tablier de coupe (1) selon l'une des revendications 1 ou 2, **caractérisé en ce que** des consoles (16) pour la liaison des bras porteurs (15) au châssis principal (2) sont disposées sur le châssis principal (2).

4. Tablier de coupe (1) selon la revendication 3, **caractérisé en ce que** chaque console (16) reçoit le premier axe de rotation (20, 20a) et le deuxième axe de rotation (21, 21a).

5. Tablier de coupe (1) selon l'une des revendications 3 ou 4, **caractérisé en ce que** deux éléments de guidage (19) sont disposés en vis-à-vis sur la console (16), parallèlement au premier axe de rotation (20, 20a), et sont chacun en prise avec une coulisse (18) dans le bras porteur (15).

6. Tablier de coupe selon la revendication 5, **caractérisé en ce que** les éléments de guidage (19) sont réalisés sous la forme de portions terminales d'un axe de pivotement (25) monté dans la console (16).

7. Tablier de coupe selon l'une des revendications 5 ou 6, **caractérisé en ce que** les coulisses (18) sont conçues de façon à former des butées pour le mouvement de pivotement autour du premier axe de rotation (20, 20a) et/ou du deuxième axe de rotation (21, 21a).

8. Tablier de coupe (1) selon l'une des revendications 5 à 7, **caractérisé en ce que** la coulisse (18) est réalisée sensiblement en forme de losange.

9. Tablier de coupe (1) selon l'une des revendications 3 à 8, **caractérisé en ce que** la console (16) respective est formée de deux éléments de fixation (22, 23) en forme de plaque, disposés parallèlement l'un à l'autre.

10. Tablier de coupe (1) selon la revendication 9, **caractérisé en ce que** les éléments de fixation (22, 23) sont réalisés de façon à présenter une plus faible distance entre eux dans une zone de réception du premier axe de rotation (20, 20a) que dans une zone de réception de l'axe de pivotement (25).

11. Tablier de coupe (1) selon l'une des revendications 3 à 10, **caractérisé en ce qu'**au moins un arbre (17) s'étendant parallèlement au châssis principal (2) de chaque portion latérale (4) est monté à rotation dans les consoles (16).

12. Tablier de coupe (1) selon la revendication 11, **caractérisé en ce que** l'arbre (17) est relié au bras porteur (15) respectif par un dispositif à levier (26).

13. Tablier de coupe (1) selon l'une des revendications 11 ou 12, **caractérisé en ce que** l'arbre (17) est relié à un capteur pour détecter le mouvement de rotation de l'arbre (17).

14. Tablier de coupe (1) selon l'une des revendications 6 à 13, **caractérisé en ce qu'**un vérin de levage (27) qui peut pivoter autour de l'axe de pivotement et qui est en liaison fonctionnelle avec le bras porteur (15) est articulé sur la console (16).

15. Tablier de coupe selon la revendication 14, **caractérisé en ce que** la pression à laquelle peut être soumis le vérin de levage (27) respectif peut être augmentée de façon à pouvoir atteindre un positionnement rigide des bras porteurs (15).
